# EUROPÄISCHE PATENTANMELDUNG

(11) **EP 2 821 241 A1**
(43) Veröffentlichungstag der Anmeldung: **07.01.2015**
(21) Anmeldenummer: 14187371.1
(22) Anmeldetag: 19.12.2012
(51) Int. Cl.: B42D 15/00

(54) **Verfahren zur Herstellung eines Druckträgers**

(30) Priorität: 20.12.2011 US 201113331369
(62) Teilanmeldung aus: 12810256.3
(71) Anmelder: Fofitec AG, 5605 Dottikon (CH)
(72) Erfinder: Fischer, Jules, 8966 Oberwil-Lieli (CH)
(74) Vertreter: Rentsch Partner AG

(57) **Zusammenfassung**

Bei einem Verfahren zur Herstellung eines aus wenigstens zwei flächigen Teildruckträgerbahnen (61, 66) koplanar zusammengefügten Druckträgers (60), wobei für eine der Teildruckträgerbahnen (61) ein Mehrschichtmaterial mit zwei Deckschichten und einem diese miteinander verbindenden, einen Klebstoff enthaltenden formlosen Beschichtungsstoff verwendet ist, wobei entlang eines Randstreifens die eine Teildruckträgerbahn (61) eine geringere Dicke als ihre Dicke im Übrigen aufweist, wobei die andere Teildruckträgerbahn eine Papierbahn (66) ist, welche entlang eines Randstreifens eine geringere Dicke als ihre Dicke im Übrigen aufweist, und wobei die beiden Teildruckträgerbahnen (61, 66) entlang ihrer beiden Randstreifen in einem Durchlauf der Bahnen koplanar miteinander verbunden werden, ist es erfindungsgemäss vorgesehen, dass in demselben Durchlauf auch der Randstreifen der Papierbahn (66), entlang von welchem die Papierbahn (66) eine geringere Dicke als ihre Dicke im Übrigen aufweist, durch Verpressen der Papierbahn (66) erhalten wird, und dass das Verpressen der Papierbahn (66) auf einer Vorrichtung mit einem Magnet- und einem Gegenzylinder ausgeführt wird, wobei auf dem Magnetzylinder ein Blech mit einem Boden und einem gegenüber diesem erhöhten Pressstreifen magnetisch fixiert ist, das auf dem Magnetzylinder einen im wesentlichen geschlossenen, gleichwohl noch offenen Ring bildet.

## Beschreibung

### TECHNISCHES GEBIET

Die vorliegende Erfindung betrifft ein Verfahren zur Herstellung eines aus wenigstens zwei flächigen Teildruckträgerbahnen koplanar zusammengefügten Druckträgers, wobei für eine der Teildruckträgerbahnen ein Mehrschichtmaterial mit zwei Deckschichten und einem diese miteinander verbindenden, einen Klebstoff enthaltenden formlosen Beschichtungsstoff verwendet ist, wobei entlang eines Randstreifens die eine Teildruckträgerbahn eine geringere Dicke als ihre Dicke im Übrigen aufweist, wobei die andere Teildruckträgerbahn eine Papierbahn ist, welche entlang eines Randstreifens eine geringere Dicke als ihre Dicke im Übrigen aufweist, und wobei die beiden Teildruckträgerbahnen entlang ihrer beiden Randstreifen in einem Durchlauf der Bahnen koplanar miteinander verbunden werden.

### STAND DER TECHNIK

Verfahren dieser Art sind bekannt aus WO 2009/135332 A2. Für die eine Teildruckträgerbahn ist hierbei ein als Laminat bezeichnetes Mehrschichtmaterial mit wenigstens zwei Deckschichten verwendet. Der diese verbindende, einen Klebstoff enthaltende formlose Beschichtungsstoff ist ein sogenannter Schälleim. Die geringere Dicke der Papierbahn entlang eines Randstreifens wird durch Entfernen einer Teilschicht der Papierschicht beispielsweise durch Abreissen erreicht.

Aus WO 2012/019953 sind Verfahren zur Herstellung von Stanzlingen in bahn- oder bogenförmigen Druckträgern und ihre Weiterverarbeitung bekannt. Dabei werden die bahn- oder bogenförmigen Druckträger im Durchlauf durch ein Stanzwerkzeug mit dem Stanzwerkzeug derart mit Stanzlingen versehen, dass sie mit den Druckträgern noch verbunden bleiben. Die Stanzlinge sind insbesondere integrierte Karten. Gleichzeitig mit dem Stanzen der Stanzlinge werden in den Druckträgern relativ zu diesen mit demselben Stanzwerkzeug jeweils toleranzfrei angeordnete Markierungen freigestanzt. Diese Markierungen können bei der nachfolgenden Bearbeitung der Stanzlinge im Durchlauf der Druckträger durch ein weiteres Werkzeug zur Einsteuerung und präzisen Platzierung eines einzusteuernden Merkmals, wie beispielsweise eines auf den Stanzlingen randbündigen Aufdrucks, verwendet werden.

Bekannt sind auch Mehrschichtmaterialien der genannten Art sind z.B. in Form von Verbundfolien, wobei wenigstens eine der beiden Deckschichten eine zumindest durchschimmernde, gereckte Kunststofffolie ist. Im Zusammenhang mit der Herstellung solcher Verbundfolien spricht man auch von Kaschieren. Charakteristisch für diese Mehrschichtmaterialien ist, dass der den Klebstoff enthaltende und in der Regel vollständig aus dem Klebstoff bestehende formlose Beschichtungsstoff eine sehr dünne Schicht bildet, die im Verhältnis zu den Deckschichten nicht wesentlich zur Gesamtdicke des Mehrschichtmaterials beiträgt. Dessen Eigenschaften werden dadurch praktisch ausschliesslich durch die Deckschichten bestimmt. Dem Beschichtungs- bzw. Klebstoff kommt ausser der Verbindung der Deckschichten keine weitere Funktion zu. Als Kostenfaktor wird die verwendete Klebstoffmenge soweit wie möglich minimiert.

In DE 199 60 411 wird als Klebstoff ein Dispersionskleber zum Verkleben von Kunststofffolien zur Herstellung von Verbundfolien verwendet, wobei durch den Klebstoff zusätzlich eine gewisse Barrierewirkung erreicht wird. Nach dem Auftrag und dem Abtrocknen ist der Klebstoff klebrig, was zur nachfolgenden Kaschierung auch erforderlich ist. Man spricht hier von Trockenkaschierung. Der Klebstoff muss schliesslich noch einige Tage aushärten, bis er seine gewünschte Festigkeit erreicht.

Aus EP 0 798 357 ist die Verwendung von wässrigen Dispersionen als Heisssiegellack bekannt. Mit diesem Lack wird ein erstes Substrat beschichtet, wonach der Lack abgetrocknet wird. Bei Raumtemperatur ist der Lack hernach nicht klebrig. Das ist wichtig, damit die beschichteten Substrate vor ihrer Verbindung mit einem weiteren Substrat gestapelt werden können, ohne dass sie zusammenhaften. Zur Verbindung mit einem weiteren Substrat werden die beschichteten Substrate mit diesem unter Anwendung von Wärme zur thermischen Aktivierung des Heisssiegellacks verpresst. Anwendung findet diese Technik vor allem bei Lebensmittelverpackungen, wobei eine Deckelfolie auf den Rand eines Bechers aus tiefgezogener Kunststofffolie aufgesiegelt wird. Auch hier sind die Schichtdicken des Heisssiegellacks im allgemeinen erwünscht dünn.

Aus US 6,699,629 B1 ist ein verhältnismässig dickes Mehrschichtmaterial bekannt, das als Träger von Druckbildern vorgesehen ist und bei geringem Gewicht die für diesen Zweck typischen weiteren Eigenschaften hinsichtlich Steifigkeit, Planlage, Glätte, Glanz, Weisse und Opazität aufweist. Es hat einen Kern aus einem geschlossenzelligen Schaum aus einem Polymermaterial, dem hohle Mikrosphären beigemischt sein können. Für die Deckschichten sind Lagen aus Papier oder Kunststofffolien, bevorzugt biaxial orientierte Kunststofffolien, verwendet. In einer Ausführungsform werden sie unter Verwendung eines Klebstoffes auf den Schaumkern laminiert. Es ist davon auszugehen, dass auch hier nur möglichst wenig Klebstoff zum Einsatz kommt.

In anderen Ausführungsformen wird eine der Deckschichten zusammen mit dem Schaumkern in einem Arbeitsgang hergestellt und zwar durch Coextrusion aus unterschiedlichen Materialen oder durch Extrusion desselben Materials, wobei dieses auf einer Seite am Aufschäumen gehindert wird. Die andere Deckschicht wird nachfolgend unter Verwendung eines Klebers auf den Schaumkern laminiert.

Aus WO 98/26938 ist ein Formular bekannt, bei welchem in einem Papierbogen eine Karte integriert ist, welche durch deckungsgleiche, von entgegengesetzten Seiten her ausgeführte Stanzungen erzeugt ist. Gehalten wird die Karte durch eine von den Stanzungen nicht mit durchtrennte Zwischenschicht, die eine Tellschicht des Papierbogens oder eine selbsttragende, auf die Papierschicht aufgeklebte Schicht sein kann. Unter Durchtrennen der Zwischenschicht zwischen den beiden Stanzungen soll die Karte aus dem Formular herausgelöst werden können. Es hat sich jedoch gezeigt, dass die dazu erforderlichen Kräfte nicht gut beherrschbar sind. Sind sie zu gross, lässt sich die Karte nicht immer zerstörungsfrei entnehmen. Sind sie zu klein, besteht die Gefahr, dass sich die Karte vorzeitig aus Formular herauslöst, wobei insbesondere beim Durchlauf durch Drucker Probleme auftreten.

Bei Formularen mit integrierten Karten sind auf einem primären Träger in Form eines Blattes aus Papier im A4- oder Letter-Format vielfach Aufspendungen vorhanden zur Verstärkung und/oder Plastifizierung der Karten oder als Trägerschichten für diese. Um nicht das ganze Formular zu dick, zu steif und zu schwer auszubilden sowie auch aus Kostengründen, sind diese Aufspendungen in der Regel flächenmässig kleiner als der primäre Träger und nur lokal im Bereich der Karten vorhanden. Sie führen dadurch zu einer lokalen Verdickung, die wiederum zu einer Schräglage im Stapel führt. Diese Schräglage verursacht Probleme in Bogendruckern, deren Magazine dadurch auch nur teilweise befüllt werden können.

Mono-Dickfolien mit Dicken von z.B. 0,125 mm oder 0,175 mm werden ebenfalls zur Herstellung von Karten oder dergleichen verwendet, vor allem wenn für diese eine hohe Steifigkeit und/oder Widerstandsfähigkeit u.a. gegen Feuchtigkeit gefordert wird. Derartige Dickfolien, insbesondere solche aus Polyester, sind jedoch verhältnismässig teuer und in ausreichender Menge auf dem Markt nicht immer verfügbar.

### DARSTELLUNG DER ERFINDUNG

Aufgabe der Erfindung ist es, ein Verfahren zur Herstellung eines aus wenigstens zwei flächigen Teildruckträgerbahnen koplanar zusammengefügten Druckträgers der eingangs genannten Art anzugeben, welches besonders rationell ist und dadurch eine kostengünstige, wirtschaftliche Herstellung der Druckträger ermöglicht.

Diese Aufgabe wird gelöst durch ein Verfahren mit den Merkmalen des Anspruchs 1. Das erfindungsgemässe Verfahren ist demnach dadurch gekennzeichnet, der Randstreifen der Papierbahn, entlang von welchem die Papierbahn eine geringere Dicke als ihre Dicke im Übrigen aufweist, durch Verpressen der Papierbahn erhalten wird, und dass das Verpressen der Papierbahn auf einer Vorrichtung mit einem Magnet- und einem Gegenzylinder ausgeführt wird, wobei auf dem Magnetzylinder ein Blech mit einem Boden und einem gegenüber diesem erhöhten Pressstreifen magnetisch fixiert ist und wobei das Blech auf dem Magnetzylinder einen im wesentlichen geschlossenen, gleichwohl noch offenen Ring bildet.

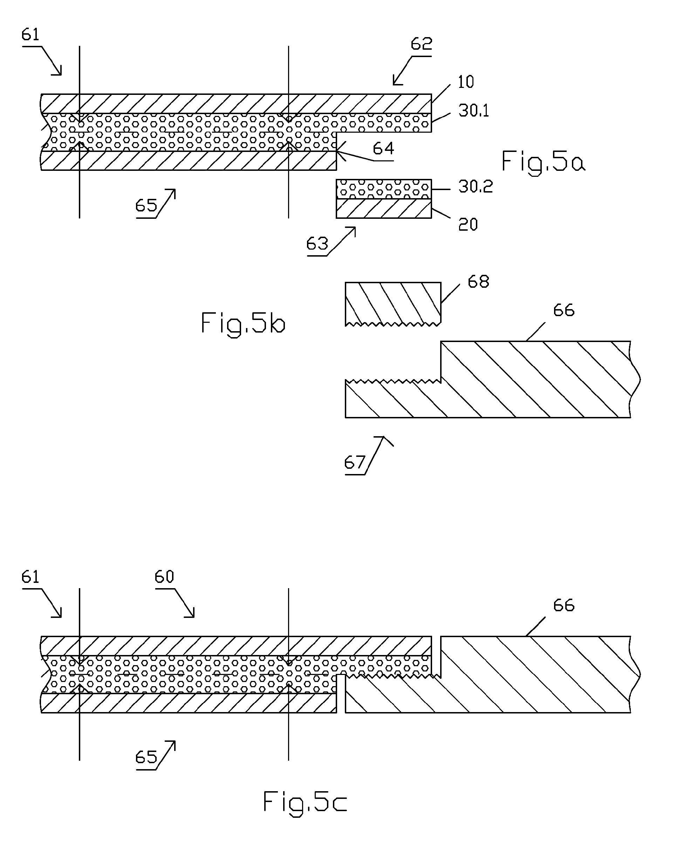

Das erfindungsgemässe Verfahren kann in Betrieben des sogenannten Web-Finishing ausgeführt werden, die für die endlose Herstellung von Druckträgern der Art von Fig. 5c bereits standardmässig mit Vorrichtungen zum Stanzen mit Magnet- und Gegenzylinder ausgerüstet sind, wobei auf dem Magnetzylinder bedarfsweise Stanzbleche magnetisch fixierbar sind.

Ausführungsformen des erfindungsgemässen Verfahrens sind in den abhängigen Ansprüchen angegeben.

Die Kostengünstigkeit und damit die Wirtschaftlichkeit des erfindungsgemässen Verfahrens gemäss Anspruch 2 ergibt sich unter anderem dadurch, dass im gleichen Durchlauf drei Bahnen, die von drei Rollen abgerollt werden, zusammengeführt und miteinander verbunden werden. Danach kann die entstandene Druckträgerbahn für eine weitere Verarbeitung in Endlosform entweder aufgerollt oder in Bögen vereinzelt werden.

Der formlose Beschichtungsstoff zur Verbindung der beiden Deckschichtbahnen der einen Teildruckträgerbahn kann ebenfalls im gleichen Durchlauf auf eine oder beide Deckschichtbahnen beschichtet werden. Diesbezüglich ist jedoch ein zweistufiges Verfahren bevorzugt mit separater, vorgängiger Beschichtung einer der oder beider Deckschichtenbahnen, die nach dieser Beschichtung wieder aufgewickelt und nach erst nach einer Zwischenlagerung zur Durchführung des erfindungsgemässen Verfahrens wieder abgerollt wird bzw. werden.

Zur Herstellung der einen Teildruckträgerbahn können Deckschichtbahnen verwendet werden, von denen wenigstens eine eine zumindest durchschimmernde, gereckte Kunststofffolie ist oder aufweist.

Die eine Teildruckträgerbahn kann weiter mit einer Gesamtdicke von 0,100 - 0,800 mm hergestellt werden, wobei der formlose Beschichtungsstoff zu dieser Gesamtdicke mindestens 18%, gegebenenfalls sogar mindestes 30 %, beiträgt und wobei der in dem Beschichtungsstoff enthaltene Klebstoff mindestens einmal mit Wärme und Druck aktivierbar, bei Raumtemperatur jedoch nicht klebrig ist.

In einer weiteren Ausführungsform können zur Herstellung der einen Teildruckträgerbahn auch Deckschichtbahnen verwendet werden, von denen wenigstens eine ebenfalls eine Mehrschichtmaterialbahn mit zwei tragenden Deckschichten und einem formlosen Beschichtungsstoff zwischen den Deckschichten ist, wobei wenigstens eine der beiden Deckschichten eine zumindest durchschimmernde, gereckte Kunststofffolie ist, wobei der Beschichtungsstoff einen Klebstoff enthält, wobei die Gesamtdicke des Mehrschichtmaterials 0,100 - 0,800 mm beträgt, wobei der Beschichtungsstoff zu dieser Gesamtdicke mindestens 18 %, gegebenenfalls sogar mindestens 30%, beiträgt, und wobei der in dem Beschichtungsstoff enthaltene Klebstoff mindestens einmal mit Wärme und Druck aktivierbar, bei Raumtemperatur jedoch nicht klebrig ist.

Zur Herstellung der einen Teildruckträgerbahn können auch Deckschichtbahnen verwendet werden, von denen die andere eine zumindest durchschimmernde, gereckte Kunststofffolie, eine Metallfolie, eine Papierschicht oder eine Kombination daraus ist.

Die erwähnte, zumindest durchschimmernde, gereckte Kunststofffolie kann jeweils mit einer Printschicht versehen sein oder werden, so dass sie gut bedruckbar ist. Weiter kann diese Printschicht opak ausgebildet sein oder werden. Zusammen mit dieser Printschicht ist die Kunststofffolie dann nicht länger durchschimmernd.

Die Verbindung der beiden Teildruckträgerbahnen entlang ihrer beiden Randstreifen und die Verbindung der beiden Deckschichtbahnen zu der einen Teildruckträgerbahn wird bevorzugt auf demselben Kaschierwerk ausgeführt, was den apparativen Aufwand zur Durchführung des erfindungsgemässen Verfahren wesentlich reduziert, und einen kompakten, platzsparenden Aufbau der eingesetzten Vorrichtung ermöglicht.

Zusätzlich zum Verpressen kann in demselben Durchlauf der Randstreifen der Papierbahn, entlang von welchem diese eine geringere Dicke als ihre Dicke im Übrigen aufweist, durch Abreissen eines Streifens von der Papierbahn erhalten werden. Als Hilfsmittel zum Abreissen kann hierbei, wie in WO 2009/135332 A2 beschrieben, ein Klebstreifen verwendet werden.

Sofern der Druckträger mit Stanzlingen z.B. in Form von integrierten Karten und diese in einem späteren Verfahrensschritt noch mit einem auf sie einzusteuernden Merkmal wie beispielsweise einem randbündigen Aufdruck oder der Codierung eines Magnetstreifens auf ihnen versehen werden müssen, kann eine weitere Rationalisierung durch folgende Massnahmen erreicht werden: Die genannten Bahnen und/oder der daraus hergestellte Druckträger werden/wird in demselben Durchlauf mit einem Stanzwerkzeug mit den Stanzlingen versehen. Dabei werden mit demselben Stanzwerkzeug relativ zu den Stanzlingen jeweils toleranzfrei angeordnete Markierungen freigestanzt, wobei diese z.B. freigestanzte Kanten sind. Diese Markierungen können dann bei der nachfolgenden Bearbeitung der Stanzlinge im Durchlauf durch ein weiteres Werkzeug zur Einsteuerung des einzusteuernden Merkmals verwendet werden. Übliche Toleranzen solcher Einsteuerungen im Millimeterbereich können mit diesen Massnahmen um eine Grössenordnung reduziert werden.

Mit demselben Stanzwerkzeug kann die Druckträgerbahn zusammen mit dem Stanzen der Stanzlinge auch gleich noch in Bögen vereinzelt werden. Als Markierungen können bei dieser Ausführungsform einfach die Bogenkanten verwendet werden.

Als formloser Beschichtungsstoff wird bevorzugt schliesslich ein solcher verwendet, der durch wenigstens eine Beimischung zum Klebstoff weniger dicht, steifer, opaker, weisser, besser oder schlechter wärmeleitend, elektrisch isolierender oder leitfähiger, elektromagnetische und/oder hoch- (HF) und/oder tieffrequente (NF) elektromagnetische Felder besser absorbierend und damit den elektromagnetischen Strahlungshintergrund besser abschirmend, hitzebeständiger, duroplastisch, flammhemmender, antibakterieller, Flüssigkeiten oder Duftstoffe enthaltend, aufnehmend oder abgebend, chemisch reaktiver und/oder phosphoreszierend bzw. mit Tages- oder UV-Licht aufladbar und dadurch im Dunkeln nachleuchtend ist.

### KURZE ERLÄUTERUNG DER FIGUREN

Die Erfindung soll nachfolgend anhand von Ausführungsbeispielen im Zusammenhang mit der Zeichnung näher erläutert werden. Es zeigen:
Fig. 1 in Schnittdarstellung eine Ausführungsform eines im Rahmen der Erfindung verwendbaren Mehrschichtmaterials;
Fig. 2 ein Verfahren zur Herstellung des Mehrschichtmaterials von Fig. 1;
Fig. 3 ein weiteres Verfahren zur Herstellung des Mehrschichtmaterials von Fig. 1;
Fig. 4 unter a) in Aufsicht einen Abschnitt eines Druckträgers aus einem im Rahmen der Erfindung verwendbaren Mehrschichtmaterial mit einer integrierten Karte, unter b) den Druckträger im Schnitt (i - i) und unter c) in gleicher Darstellung den Druckträger mit herausgelöster Karte;
Fig. 5 jeweils in Schnittdarstellung unter a) einen Abschnitt eines Teildruckträgers aus einem Mehrschichtmaterial gemäss Fig.1 mit einem dickenreduzierten Randstreifen, unter b) einen Abschnitt eines Teildruckträgers aus Papier, ebenfalls mit einem dickenreduzierten Randstreifen und unter c) einen aus den beiden Teildruckträgern koplanar zusammengefügten Druckträger;
Fig. 6 unter a) im Schnitt ein Pressblech zum Verpressen eines endlosen Teildruckträgers aus Papier und unter b) das Pressblech in Aufsicht;
Fig. 7 in Schnittdarstellung eine Ausführungsform eines im Rahmen der Erfindung verwendbaren Mehrschichtmaterials mit einer zusätzlichen Printschicht;
Fig. 8 in Schnittdarstellung eine Ausführungsform eines im Rahmen der Erfindung verwendbaren Mehrschichtmaterials mit einer zusätzlichen Kleberschicht;
Fig. 9 in Schnittdarstellung eine Ausführungsform eines im Rahmen der Erfindung verwendbaren Mehrschichtmaterials mit einer zusätzlichen Funktionsschicht; und
Fig. 10 unter a) ein Verfahren nach der Erfindung zur Herstellung eines Druckträgers aus drei Endlosbahnen im gleichen Durchlauf, unter b) die drei Endlosbahnen in Aufsicht und unter c) in Schnittdarstellung (ii-ii) den sich ergebenden Druckträger.

Die Figuren sind schematisch ausgeführt, wobei insbesondere die Schichtdicken stark übertrieben dargestellt sind.

### WEGE ZUR AUSFÜHRUNG DER ERFINDUNG

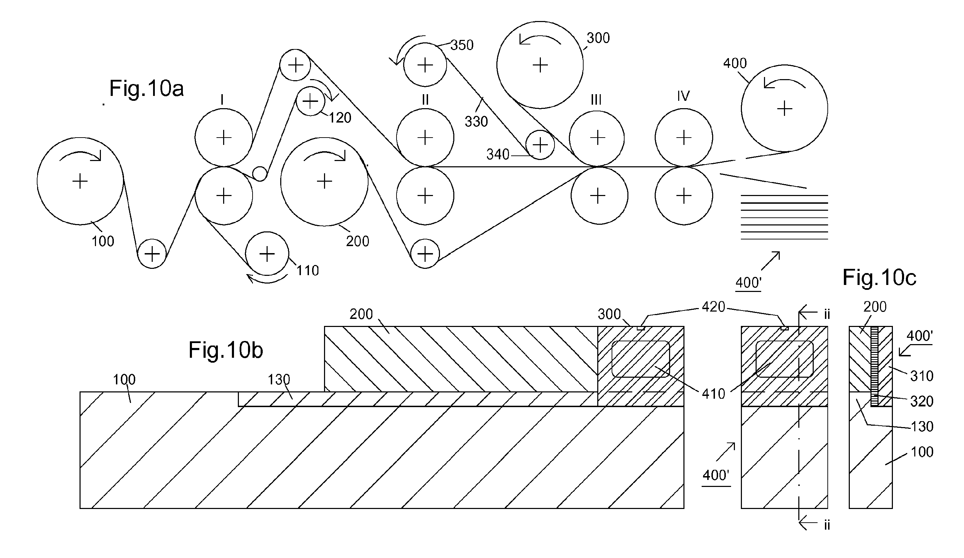

Fig.10 illustriert unter a) ein Verfahren zur Herstellung eines Druckträgers 400 in Endlosform oder einzelner Druckträgerbögen 400' aus drei Endlosbahnen 100, 200 und 300 im Durchlauf durch vier Stationen 1 - IV mit jeweils zwei Zylindern. Zumindest einer dieser Zylinder kann ein Magnetzylinder sein, auf dem ein Blech beispielsweise in Form eines Stanz- oder Pressblechs magnetisch fixiert sein kann. Unter b) sind parallel dazu die Endlosbahnen sowie und ein daraus hergestellter Druckträgerbogen in Aufsicht dargestellt. Ein Schnitt (ii-ii) durch einen Druckträgerbogen 400' ist unter c) dargestellt. Die Endlosbahnen werden von entsprechend bezeichneten Rollen abgewickelt. Der Druckträger 400 wird auf einer entsprechend bezeichneten Rolle aufgewickelt. Die einzelnen Druckträgerbögen 400'werden abgestapelt.

Die Endlosbahn 100 ist eine Papierbahn. In der Station I wird sie entlang eines Randstreifens 130 in ihrer Dicke reduziert und zwar durch Abreissen einer Teilschicht, wie dies auch in Fig. 5b dargestellt ist. Das Abreissen der Teilschicht erfolgt mittels eines Klebestreifens, der bei 110 abgerollt und auf dem unteren Zylinder auf der Papierbahn 100 aufgeklebt wird. Im Spalt zwischen den beiden Zylindern wird der Klebestreifen von der Papierbahn wieder abgezogen, wobei er die Teilschicht mitnimmt und zusammen mit ihr bei 120 wieder aufgerollt wird. Eine Absaugung wäre hier auch möglich. Das Abreissen der Teilschicht lässt sich durch Einschneiden der Papierbahn 100 entlang des Randstreifens 130 erleichtern, wodurch auch eine gerade Risskante erreicht wird. Dieses Einscheiden kann ebenfalls auf dem unteren Zylinder erfolgen, indem dieser mit einer umlaufenden Schneide (nicht dargestellt) versehen wird.

Der Klebestreifen kann bei 110 auf sich selbst aufgerollt sein. Erlaubt der Kleber des Klebestreifens dies nicht, könnte die Kleberseite des Klebestreifens zusätzlich mit einer Abdeckung versehen sein (wie dies bei der Endlosbahn 300 vorgesehen ist und nachstehend noch beschrieben wird). Diese Abdeckung müsste dann vor der Verbindung mit der Papierbahn erst noch entfernt werden.

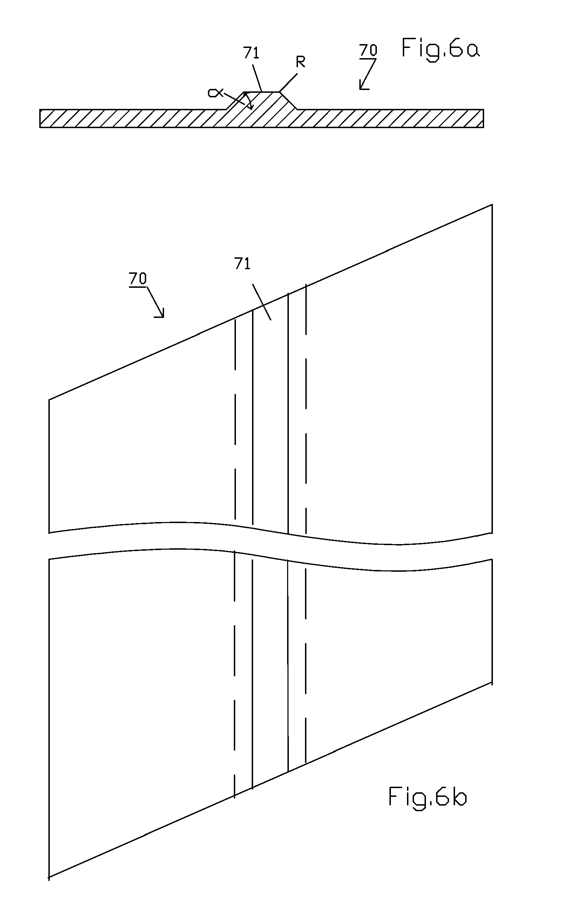

Die Papierbahn 100 durchläuft nachfolgend die Station II, in welcher der bereits geschwächte Randstreifen 130 zusätzlich verpresst und in seiner Dicke weiter reduziert wird, so wie dies nachstehend mit Bezug auf Fig. 6 noch näher erläutert wird. Dadurch erhält man zusätzlich eine Glättung sowie ein Verfestigung des durch das vorherige Reissen in seinem Zusammenhalt geschwächten Papiermaterials, was sich auch günstig auf die Qualität und Haltbarkeit der nachfolgenden Verbindung mit der Endlosbahn 300 auswirkt.

Gegebenenfalls ist es möglich, die gewünschte Restdicke des Randstreifens 130 allein durch Verpressen in der Station II zu erzielen. In diesem Falle könnte die Station I eingespart oder umgangen werden. Welche Art der Dickenreduzierung zum Einsatz kommt oder ob es, wie dargestellt, beide Methoden braucht, hängt von der Papierqualität, der Papierdicke sowie der gewünschten Restdicke des Randstreifens ab.

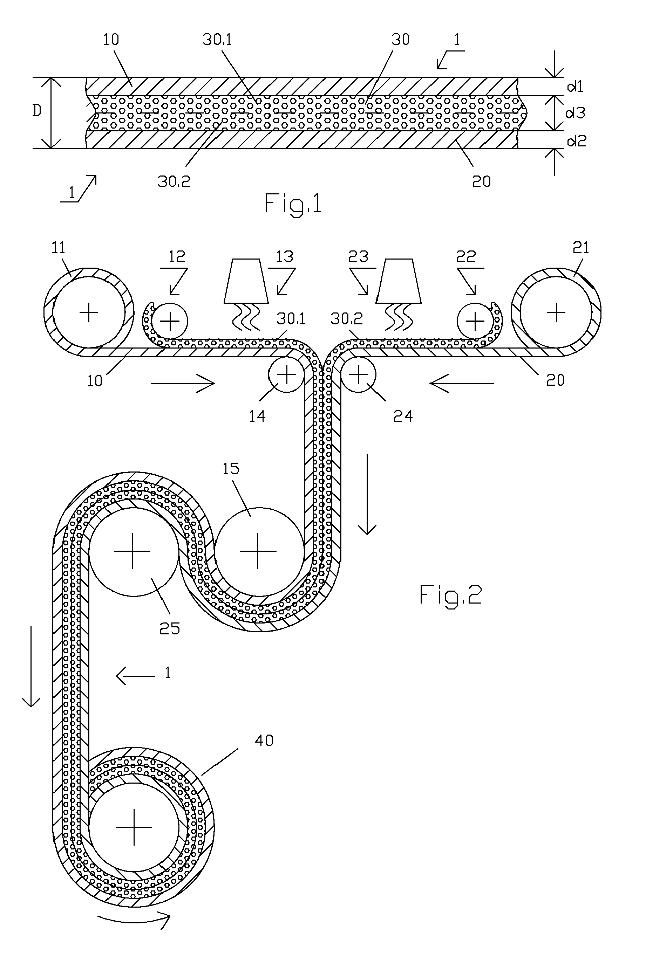

Die Endlosbahn 200 ist bei einfachster Ausführung und wie in Fig. 10 auch angenommen, eine Folienbahn. Bei der Endlosbahn 200 könnte es sich auch um ein Mehrschichtmaterial handeln, wie es nachstehend unter Bezug auf die Figuren 1, 7, 8 und 9 noch beschrieben wird. Es muss dazu aber nicht unbedingt in sich trennbar sein.

Wie dies unter b) erkennbar ist, wird die Endlosbahn 200 parallel neben der Endlosbahn 100 und randbündig mit dieser, jedoch ohne gegenseitige Überlappung auf der Seite des geschwächten Randstreifens 130 geführt. Die Verbindung der beiden Endlosbahnen 100 und 200 miteinander wird erst durch die Endlosbahn 300 und deren Überlappung mit beiden Bahnen 100 und 200 erreicht.

Die Endlosbahn 300 umfasst bei einfachster Ausführung eine ganzflächig mit einer Selbstkleberschicht 320 versehene Folienbahn 310. Damit sie auf der Rolle 300 auf sich selbst aufwickelbar ist, ist die Selbstkleberschicht 320 dort noch mit einer silikonisierten Abdeckung 330 versehen ist. Diese wird nach der Abrollung bei 340 von der Selbstkleberschicht 320 abgezogen und bei 350 aufgerollt. Mit der Selbstkleberschicht 320 gegen die beiden anderen Endlosbahnen 100 und 200 gerichtet wird die Bahn 300 sodann in der Station III mit diesen zusammengeführt und mittels der Selbstkleberschicht 320 unter Aufwendung von Druck im Spalt zwischen den beiden Zylindern zum Druckträger 400 verbunden (kaschiert).

Wie dies unter b) erkennbar ist, ist die Endlosbahn 300 etwas breiter als die Endlosbahn 200 und zwar gerade um die Breite des geschwächten Randstreifens 130 der Papierbahn 100. Aussenseitig werden die Bahnen 200 und 300 randbündig übereinander geführt. Die Endlosbahn 300 überdeckt dadurch die Endlosbahn 200 vollständig und überlappt gerade mit dem geschwächten Randstreifen 130 der Papierbahn 100, wie dies in der Schnittdarstellung von unter c) ebenfalls erkennbar ist. Erkennbar ist in dieser Darstellung zudem, dass die Dicke der Papierbahn 100 mit der Summe der Dicken der beiden Endlosbahnen 200 und 300 übereinstimmt, so dass der Druckträger 400, 400' insgesamt eine einheitliche Dicke aufweist.

Es könnten prinzipiell auch zwei gleich breite Bahnen 200 und 300 seitlich gegeneinander versetzt miteinander verbunden werden, wobei dann der sich ergebende randseitige Überstand der Bahn 200 über die Bahn 300 nachfolgend gegebenenfalls noch abgeschnitten werden müsste.

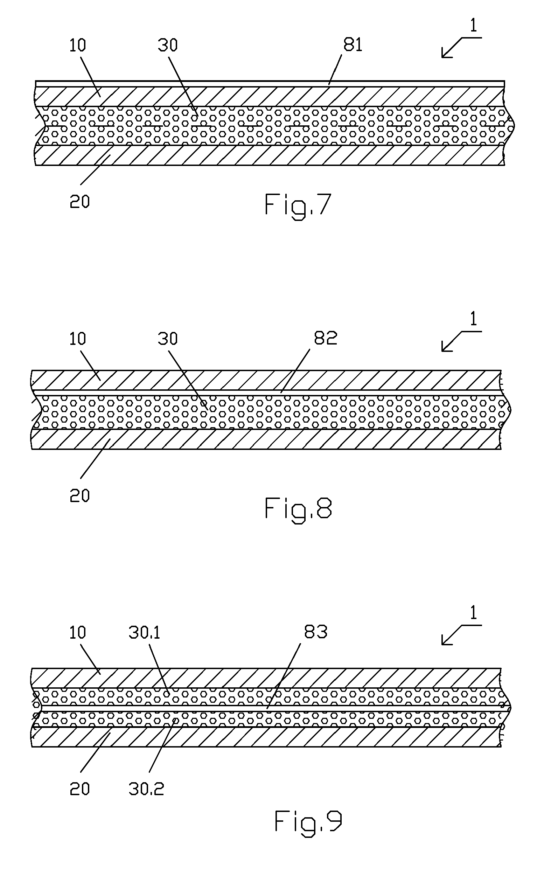

Der nach dem vorstehend beschriebenen Verfahren hergestellte Druckträger 400, 400' kann als aus zwei Teildruckträgerbahnen koplanar zusammengefügt aufgefasst werden, wobei eine der beiden Teildruckträgerbahnen dabei ein Mehrschichtmaterial mit zwei Deckschichten (den Deckschichten 200 und 310) und einem diese miteinander verbindenden, einen Klebstoff enthaltenden formlosen Beschichtungsstoff ist. Den formlosen Beschichtungsstoff bildet bei dieser Betrachtung der Selbstkleber 320. Die zweite Teildruckträgerbahn bildet bei dieser Betrachtung die Papierbahn 100. Mit Bezug auf Fig. 5 wird nachstehend ein prinzipiell ebenso aufgebauter Druckträger beschrieben, wobei für das Mehrschichtmaterial dort ein Material gemäss Fig. 1 verwendet ist. Die Materialien nach den Figuren 7, 8 und 9 wären auch möglich. Bei diesen Materialien enthält der formlose Beschichtungsstoff neben anderen optionalen Komponenten einen mit Hilfe von Wärme und Druck zumindest einmal aktivierbaren Klebstoff. Wie nachstehend für das Mehrschichtmaterial von Fig. 1 beschrieben, könnten dessen beide Deckschichten in einem separaten Beschichtungsschritt vor ihrer gegenseitigen Verbindung mit formlosem Beschichtungsstoff beschichtet und nachfolgend für eine Zwischenlagerung aufgewickelt werden. Derart vorbeschichtete Deckschichten kämen als Endlosbahnen 200 und 300 im Rahmen des vorbeschriebenen Verfahrens ebenfalls in Frage. Ihre gegenseitige Verbindung und die Verbindung mit der Papierschicht müssten dabei in einer ggf. zu modifizierenden Station III unter Aktivierung des Klebers in dem formlosen Beschichtungsstoff unter Anwendung von Wärme und Druck erfolgen. Wie nachstehend ebenfalls erwähnt, wäre es auch möglich, nur eine der beiden Deckschichten vorzubeschichten. Diese Deckschicht käme dann als Endlosbahn 300 zum Einsatz.

Die Station IV ist eine Stanzvorrichtung. In dieser kann der Druckträger 400 durch Stanzen in die Druckträgerbögen 400' vereinzelt und/oder bei Bedarf mit weiteren Stanzungen versehen werden. Sofern keine Vereinzelung in Bögen oder anderweitige stanzen erforderlich sind, kann die Station IV eingespart oder umgangen werden.

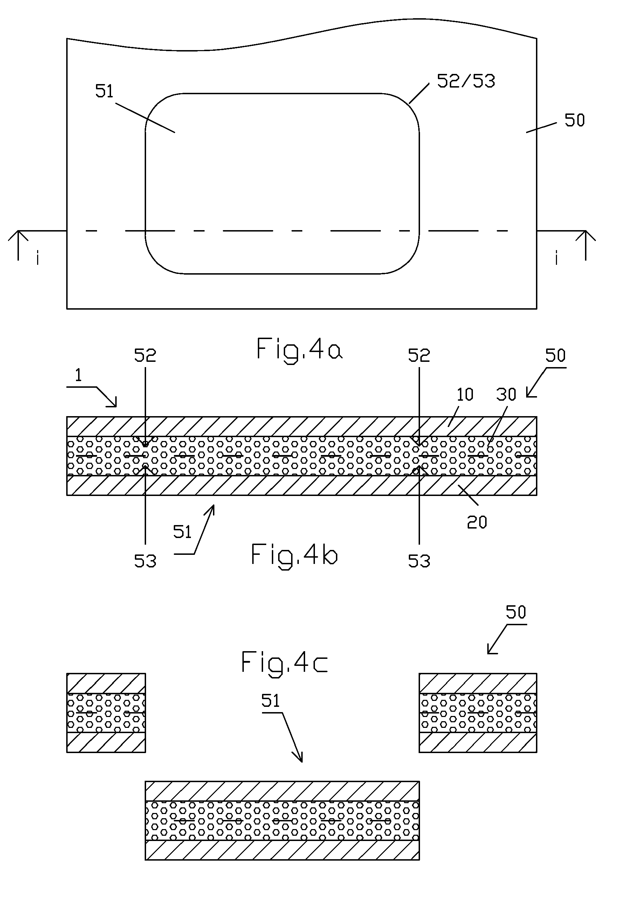

Als Beispiel für eine mögliche Stanzung in der Station IV sind in Fig. 10 im Druckträger 400, 400' in dem Mehrschichtmaterial noch Karten 410 so gestanzt, dass sie mit dem Druckträger verhaftet bleiben, aus diesem aber herauslösbar sind. Dies lässt sich gegebenenfalls erreichen durch eine Stanzung, wie nachstehend im Zusammenhang mit den Figuren 4 oder 5 beschrieben oder auch durch eine Stegstanzung bzw. eine Schnitt-/Stegstanzung. Bei letzterer wird zumindest eine der beiden Deckschichten komplett durchtrennt. In der anderen werden zumindest teilweise noch Stege belassen.

Fig. 10 zeigt schliesslich auch noch mit 420 bezeichnete, freigestanzte Kerben im Rand des Druckträgers 400, 400', welche durch gleichzeitiges Stanzen zusammen mit den Karten 410 in der Station IV erzeugt und dadurch praktisch toleranzfrei relativ zu diesen angeordnet sind. Diese Kerben 420 können bei einer Weiterverarbeitung der Druckträger 400, 400' zu positionsgenauen Einsteuerung eines Merkmals auf den Karten wie z.B. eines randbündigen Aufdrucks verwendet werden. Mit dem Stanzwerkzeug der Station IV kann, wie bereits erwähnt, aus der Station III kommende Endlosbahn auch in die Druckträgerbögen 400' vereinzelt werden. Als Stanzwerkzeug wird dabei in der Station IV bevorzugt ein Stanzblech eingesetzt, auf dem alle gewünschten Schnittlinien als Stanzgrate ausgebildet sind. Bei Vereinzelung in Einzelbögen mit einem solchen Stanzblech können als Markierungen zum nachträglichen Einsteuern eines Merkmals anstelle von Kerben wie den Kerben 420 auch die Bogenkanten verwendet werden, da auch diese in diesem Fall praktisch toleranzfrei relativ zu den Karten 410 angeordnet sind.

Das Mehrschichtmaterial 1 von Fig. 1 umfasst zwei tragende Deckschichten 10, 20 sowie einen formlosen Beschichtungsstoff 30 zwischen diesen Deckschichten. Die Eigenschaft "tragend" bezüglich der Deckschichten bzw. "formlos" bezüglich des Beschichtungsstoffs beschreiben ihren jeweiligen Zustand im Augenblick des Aufbringens des Beschichtungsstoffs, wie dies noch näher beschrieben wird. Die beiden Deckschichten 10, 20 sind transparente, gereckte Kunststofffolien aus Polyester. Durch die Reckung sind sie auch unter erhöhter Temperatur relativ dimensionsstabil. Der Beschichtungsstoff 30 enthält einen thermoaktivierbaren Klebstoff, ist weiss oder farbig opak und verbindet die beiden Deckschichten 10, 20 direkt miteinander.

Die Gesamtdicke D des Mehrschichtmaterials von Fig. 1 beträgt 0,175 mm und liegt damit im Bereich relativ dicker Monofolien, wie sie unter anderem für Karten verwendet werden. Die beiden Deckschichten 10, 20 weisen jeweils nur eine Dicke d1 bzw. d2 von 0,050 mm und der Beschichtungsstoff 30 bzw. die durch ihn gebildete Schicht eine Dicke d3 von 0,075 mm auf. Der Beschichtungsstoff trägt damit mit einem wesentlichen Anteil zur Gesamtdicke D bei. Die Dicken d1, d2 der beiden Deckschichten 10, 20 liegen demgegenüber im Bereich der Dicken von üblichen Gebrauchsfolien. Zusammen sollten die beiden Deckfolien 10, 20 nicht mehr als 0,150 mm zur Gesamtdicke D beitragen. Im Vergleich mit einer 0,175 mm dicken, opaken Polyester-Monofolie sind die beiden Deckschichten 10, 20 sogar zusammengenommen wesentlich preisgünstiger, was u.a. durch ihre Transparenz (Wegfall von Opazitätsmitteln wie teurem Titandioxid) sowie die wesentlich grösseren Verbrauchsmengen an solchen Folien bedingt ist.

Der Beschichtungsstoff 30 enthält, wie schon erwähnt, einen thermoaktivierbaren Klebstoff sowie Beimischungen zum Klebstoff. Der Klebstoff beruht beispielsweise auf der Basis von Acrylat, Polyurethan, Polyester, Epoxidharz, Ethylenvinylacetat (EVA) und/oder Ethylethylenacrylat (EAA). Bei Raumtemperatur ist er nicht klebrig, durch Erwärmen über die Raumtemperatur hinaus und Druck jedoch aktivierbar. Sein Anteil im Beschichtungsstoff beträgt zwischen 25 - 69 Gew.-%, vorzugsweise 39 - 56 Gew.-%, des Trockengewichtes des Beschichtungsstoffes 30. Entsprechend beträgt der Anteil an Beimischungen 31 - 75 Gew.-%, vorzugsweise 44 - 61 Gew.-% und ist damit vergleichsweise hoch, wie dies bei Kaschierklebern nicht üblich ist. Durch die Beimischungen reduziert sich die Klebkraft der Gesamtmischung des Beschichtungsstoffes 30. Durch Wahl des Klebstoffes und des Anteils an Beimischungen lässt sich die Klebkraft in gewissem Umfang einstellen. Durch eine nicht zu hohe Klebkraft kann eine Trennbarkeit des Mehrschichtmaterials in sich erreicht werden, was für gewisse Anwendungen, wie im Zusammenhang mit Fig. 5 noch beschrieben wird, von Vorteil sein kann.

Bei den Beimischungen handelt es sich zumindest überwiegend um Füllstoffe in Partikelform, wobei insbesondere Carbonate wie Kalziumcarbonat, Oxide wie Titandioxid und Zinkoxid, Silikate wie Kaolin und Talk, Sulfate wie Bariumsulfat, Fasern wie Glasfasern und/oder Leichtfüllstoffe wie hohle Mikrosphären aus Glas oder Kunststoffen in Frage kommen. Die Füllstoffe sind im Kleber fein verteilt enthalten, wobei der Kleber eine Art Matrix für die Füllstoffe bildet. Die Füllstoffe tragen zum Volumen des Beschichtungsstoffes 30 bei und bewirken auch dessen erwähnte Opazität. Eine ausgeprägte Weisse lässt sich durch Beimischung von Titandioxid erreichen. Leichtfüllstoffe wie die hohlen Mikrosphären tragen viel zum Volumen bei, ohne gleichzeitig das Gewicht wesentlich zu erhöhen. Damit bewirkt der Beschichtungsstoff eine vorteilhaft geringe Dichte des Mehrschichtmaterials.. Durch die Wahl der Füllstoffe lässt sich auch die Biegesteifigkeit des Mehrschichtmaterials und/oder die Reissfestigkeit des Beschichtungsstoffes 30 variieren und einstellen.

### BEISPIELE FÜR BESCHICHTUNGSSTOFF-ZUSAMMENSETZUNGEN

In den nachstehenden Beispielen dient jeweils die an erster Stelle genannte Komponente als Klebstoff.

### A. Wässrige Beschichtungsstoffe (mit allenfalls geringem Lösemittelanteil<5%)

### Beispiel A.a

| Komponenten | Dichte [g/cm³] | Gew.-% trocken | Vol.-% |
|---|---|---|---|
| #7 Hycar 26084 | 1.00 | 50.50 | 50.50 |
| #5 Calcit MX10 | 2.72 | 37.90 | 13.96 |
| #3 Tiona 595 | 4.10 | 9.30 | 2.27 |
| Gesamtdichte / Summe | 1.46 | 97.7 | 66.73 |

Die Komponente #7 ist rein wässrig auf carboxy-modifizierter Acrylatbasis und haftet gut auf verschiedenen Deckschichten. Ohne Zufügen eines Vernetzers wird dennoch eine gewisse Vernetzung erzielt, die eine erhöhte chemische Stabilität und mechanische Festigkeit bewirkt. Die Gesamtdichte ist mit 1.46 relativ hoch und damit für die meisten Anwendungen nicht sehr wirtschaftlich.

### Beispiel A.b

| Komponenten | Dichte [g/cm³] | Gew.-% trocken | Vol.-% |
|---|---|---|---|
| #8 Alfa VP 58/405 | 1.10 | 44.50 | 40.45 |
| #2 Kaolin K1 | 2.60 | 33.40 | 12.85 |
| #3 Tiona 595 | 4.10 | 9.50 | 2.32 |
| #4 Q-Cel 5020 | 0.20 | 11.10 | 55.50 |
| Gesamtdichte / Summe | 0.89 | 98.5 | 111.12 |

Die Komponente #4 besteht aus Mikrohohlglaskugeln. Durch diese Komponente ist die Gesamtdichte auf einen wirtschaftlicheren Wert von 0,89 reduziert. Die Komponente #8 dient als wässriger Polyurethan-Heissiegellack zur Verbindung der Deckschichten.

### Beispiel A.c

| Komponenten | Dichte [g/cm³] | Gew.-% trocken | Vol.-% |
|---|---|---|---|
| #9 Michem Flex 1852 | 1 | 44 | 44 |
| #2 Kaolin K1 | 2.6 | 32.9 | 12.65 |
| #3 Tiona 595 | 4.1 | 9.5 | 2.32 |
| #4 Q-Cel 5020 | 0.2 | 11.1 | 55.5 |
| Gesamtdichte / Summe | 0.85 | 97.5 | 114.47 |

Hier dient die Komponente #9 als Kleber.

### B. Lösemittelhaltige Beschichtungsstoffe

### Beispiel B.a

| Komponenten | Dichte [g/cm³] | Gew.-% trocken | Vol.-% |
|---|---|---|---|
| #1 Rotoflex L-130 | 0.90 | 50.00 | 55.56 |
| #5 Calcit MX10 | 2.72 | 41.20 | 15.17 |
| #3 Tiona 595 | 4.10 | 8.80 | 2.15 |
| Gesamtdichte / Summe | 1.37 | 100 | 72.88 |

Die Komponente #1 ist ein heisssiegelbarer Lack, der speziell gut auf Polyester-Deckschichten haftet und siegelt. Die Komponente #5 verbessert die Opazität und Wärmebeständigkeit besser als die Komponente #3, aber erreicht diese bezüglich optischer Eigenschaften aber nicht. Die Gesamtdichte von ist hier mit 1.37 wieder relativ hoch.

### Beispiel B.b

| Komponenten | Dichte [g/cm³] | Gew.-% trocken | Vol.-% |
|---|---|---|---|
| #1a Rotoflex L 120- 20 | 0.87 | 50.00 | 57.47 |
| #2 Kaolin K1 | 2.60 | 30.10 | 11.58 |
| #3 Tiona 595 | 4.10 | 8.80 | 2.15 |
| #4 Q-Cel 5020 | 0.20 | 11.10 | 55.50 |
| Gesamtdichte / Summe | 0.79 | 100 | 126.69 |

Die Gesamtdichte ist in diesem Beispiel durch Zugabe von Mikroglashohlkugeln der Komponente #4 reduziert unter gleichzeitiger Erhöhung der Opazität und Steifigkeit. Die Komponente #1a dient als Kleber mit besserer Haftung und Siegelung auf orientierter Polypropylenfolie.

### C. Extrudierbare Beschichtungsstoffe

### Beispiel C.a

| Komponenten | Dichte [g/cm³] | Gew.-% trocken | Vol.-% |
|---|---|---|---|
| # 10 Amplify EA 100 | 0.93 | 46.00 | 49.46 |
| #5 Calcit MX10 | 2.72 | 45.00 | 16.57 |
| # 6 TiPure R-350 | 4.10 | 9.00 | 2.20 |
| Gesamtdichte / Summe | 1.47 | 100 | 68.23 |

In diesem Beispiel sorgt die Komponente #10 (Amplify EA 100 Ethylen Ethyl Acrylat (EEA)) für eine gute Verhaftung verschiedenster Deckschichten. Die speziell für die Extrusion entwickelte Komponente #6 sorgt für eine hohe Opazität und UV-Stabilität. Die Komponente #5 trägt als Füllstoff zur Opazität und zur Wärmestabilität bei.

Die Gesamtdichte von 1.47 ist wirtschaftlich jedoch nicht interessant.

### Beispiel C.b

| Komponenten | Dichte [g/cm³] | Gew.-% trocken | Vol.-% |
|---|---|---|---|
| #11 Amplify VA 400 | 0.93 | 46.00 | 49.57 |
| #5 Calcit MX-10 | 2.72 | 30.90 | 11.36 |
| #6 TiPure R-350 | 4.10 | 4.00 | 0.98 |
| #4 Q-Cel 7023 | 0.23 | 15.10 | 65.65 |
| Gesamtdichte / Summe | 0.78 | 100 | 127.56 |

Durch die Zumischung von Mikroglashohlkugeln (4) mit Durchmessern im Bereich von 0,045 mm und einer Dichte von 0,22 wird fast eine Halbierung der Dichte gegenüber Beispiel C.a erreicht. Zudem wird durch diese Zugabe auch die Biegesteifigkeit erhöht und die Opazität verbessert. Hier haftet die Komponente #11 als Beschichtung und als Extrusionskaschierkleber auf EVA Basis auf einer Vielzahl von Deckschichten.

### Lieferanten

- #1, #1a: Rotoflex AG, Lebernstrasse 40, CH-2540 Grenchen
- #2: Alberto Luisoni AG, General Wille Strasse 201, CH-8706 Feldmeilen
- #3: idem für Titandioxyd
- #4: idem für Mikrohohlglaskugeln
- #5: idem für Calziumcarbonat Calcit
- #6: DuPont de Nemours International S.A. DuPont Titanium Technologies, Ketenislaan 1 'Singelberg' Haven 1548, B-9130 Kallo
- #7: Lubrizol Advanced Maetrials, Inc., Chaussee de Wavre 1945, B-1160 Brussels
- #8: Alfa Klebstoffe AG, Vor Eiche 10, CH-8197 Rafz
- #9: Keyser & Mackay, Badenerstrasse 587, CH-8048 Zürich
- #10: Dow Belgium B.V.B.A., Prins Boudewijnlaan 41, B-2650 Edegem
- #11: idem

Fig. 2 illustriert ein Verfahren zur Herstellung eines Mehrschichtmaterials 1 gemäss Fig. 1 unter Einsatz eines Beschichtungsstoffes in flüssiger oder pastöser Form beispielsweise nach einem der Beispiele A oder B. Die beiden Deckschichten 10 und 20 werden als Endlosbahnen von einer Rolle 11 bzw. 21 abgewickelt und einem Beschichtungswerk 12 bzw. 22 zugeführt, wo auf sie jeweils eine Lage 30.1 bzw. 30.2 aus dem vorbeschriebenen Beschichtungsstoff in flüssiger oder pastöser Form beispielsweise gemäss einem der oben angegebenen Beispiele A oder B aufgetragen wird. Die Beschichtungswerke können wie in Fig. 2 dargestellt Walzen, aber auch kalte Düsen im Kontakt zu 10 und 20 oder auf Distanz dazu (curtain coating) sein.

In organischen Lösemitteln gelöste Komponenten sowie allfällige Additive können vor dem Auftrag chargenweise oder mit in line kontinuierlicher Zuführung gemischt und homogenisiert werden.

In Trocknungswerken bei 13 bzw. 23 werden die beiden Lagen 30.1 und 30.2 Beschichtungsstoff unter Anwendung von Wärme (z.B. mit Heissluft) getrocknet. Sofern es sich um einen Beschichtungsstoff auf wässriger Basis handelt, wird das Wasser und bei einem Beschichtungsstoff auf lösemittelhaltiger Basis das Lösungsmittel abgedunstet. Danach werden die beiden so beschichteten Deckschichten gegeneinander geführt und mit geheizter Walze 14 und Gegenwalze 24 miteinander verpresst. Durch die über die Walze 14 eingebrachte Wärme wird der in den beiden Lagen 30.1 bzw. 30.2 Beschichtungsstoff enthaltende Kleber weiter aktiviert, so dass die beiden Lagen eine gegenseitige Verbindung eingehen und aneinander haften. Es entsteht die in Fig. 1 dargestellte Schicht Beschichtungsstoff 30 mit der Dicke d3. In Fig. 1 ist die Grenzfläche zwischen den beiden Lagen 30.1 und 30.2, aus denen diese Schicht mit dem Verfahren von Fig. 2 erhalten wird, durch eine strichlierte Linie angedeutet. Zwischen den beiden Deckschichten 10, 20 und dem Beschichtungsstoff 30 ergibt sich natürlich auch eine Haftverbindung, wobei sich diese zumindest teilweise schon vorher, insbesondere beim Abtrocknen der beiden Lagen 30.1 und 30.2 ausbildet. Diese Haftung wird in der Regel sogar stärker sein als die zwischen den beiden Lagen, was wie nachstehend noch beschrieben durchaus von Vorteil ist und auch funktionell ausgenutzt werden kann. Das so erhaltene Mehrschichtmaterial 1 wird schliesslich im gleichen Durchlauf für eine spätere Verwendung auf einer Rolle 40 aufgewickelt. Alternativ könnte es auch direkt weiterverarbeitet werden. Das Aufwickeln bzw. die direkte Weiterverarbeitung sind möglich, weil das Mehrschichtmaterial unmittelbar nach dem Abkühlen auf Raumtemperatur bereits seine volle Verbundfestigkeit erreicht. Das Abkühlen kann unterstützt und beschleunigt werden durch den Einsatz von Kühlwalzen 15,25 nach dem Walzenpaar 14, 24.

Der Abstand zwischen den Trocknungswerken 12 und 22 und dem Walzenpaar 14, 24 ist unter Berücksichtigung der Laufgeschwindigkeiten der beiden Deckschichtbahnen so gewählt, dass diese und vor allem die beiden Lagen 30.1 und 30.2 Beschichtungsstoff zum Zeitpunkt ihrer Zusammenführung noch heiss sind, so dass nur noch wenig Wärme über die Walzen 14, 24 zusätzlich zugeführt werden muss, um den Kleber im Beschichtungsstoff zu aktivieren, was Energie spart. Andererseits ist der Abstand zwischen den Walzen 14, 24 und der Rolle 40 so gross bemessen, dass der Kleber im Beschichtungsstoff noch vor Erreichen der Rolle 40 ausreichend Zeit hat, sich unter Abkühlung unter seine Aktivierungstemperatur wieder zu verfestigen, damit das Mehrschichtmaterial die zum Aufwickeln erforderliche Festigkeit besitzt. Dieser Abstand kann durch den Einsatz der Kühlwalzen 15,25 ggf. verringert werden.

Der Beschichtungsstoff 30 könnte bei dem Verfahren von Fig. 2 auch nur einseitig, d.h. in voller Schichtdicke d3 auf eine der beiden Deckschichten 10, 20 aufgebracht werden. Vorteilhaft wäre hierbei, dass nur ein Beschichtungswerk 12 oder 22 und eine Trocknungsstation 12 oder 22 erforderlich wäre. Nachteilig wäre, dass die Trocknung der doppelt dicken Schicht Beschichtungsstoff weniger effektiv ausgeführt werden könnte und ggf. eine intensivere Trocknung, eine längere Trocknungszeit durch einen längeren Trocknungsweg und/oder eine geringere Bahngeschwindigkeit in Kauf genommen werden müsste.

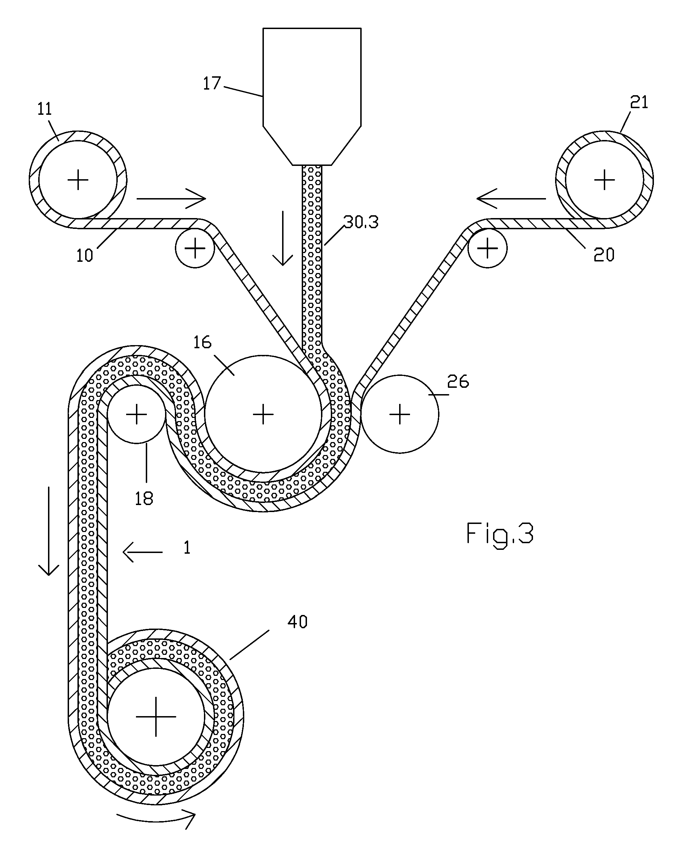

Fig. 3 illustriert ein Verfahren zur Herstellung eines Mehrschichtmaterials 1 unter Einsatz eines extrudierbaren Beschichtungsstoffes beispielsweise nach einem der Beispiele C. Die Deckschichten 10 und 20 werden auch hier wieder als Endlosbahnen von einer Rolle 11 bzw. 21 abgewickelt, dann jedoch im Spalt zwischen einer Kühlwalze 16 und einer Anpresswalze 26 zusammengeführt. Der Beschichtungsstoff 30 wird aus einem Extruder 17 mit Breitschlitzdüse als heisser Vorhang 30.3 zwischen die beiden Deckschichten eingebracht, wobei er etwas früher mit der Deckschicht 10 als mit der Deckschicht 20 in Kontakt kommt. Die im Beschichtungsstoff vorhandene Wärme reicht aus, zusammen mit dem durch die Walzen 16 und 26 erzeugten Druck, die gewünschte Verbindung zwischen den Deckschichten herzustellen. Durch die grosse Kühlwalze 16 und ggf. weitere, hier nicht dargestellte Kühlstrecken wird das entstandene Mehrschichtmaterial 1 schnell auf Raumtemperatur heruntergekühlt. Dadurch verfestigt wird es über die Abnahmewalze zur Aufwicklung bei 40 oder einer direkten Weiterverarbeitung geführt. Im Unterschied zum Mehrschichtmaterial von Fig. 1 weist das Mehrschichtmaterial hier eine einheitliche Schicht 30 Beschichtungsstoff auf, d.h. diese Schicht Beschichtungsstoff ist nicht aus mehreren, ggf. voneinander wieder trennbaren Teilschichten wie die Schichten 30.1 und 30.2 zusammengefügt. Durch die Kombination von mehreren, einem oder mehreren Extrudern zugeordneten Düsen lässt sich jedoch auch extrusionstechnisch eine mehrlagige bzw. mehrlagig differenzierte Schicht Beschichtungsstoff 30 erzielen.

Der für das Verfahren gemäss Fig. 3 verwendete extrudierbare Beschichtungsstoff enthält neben Zusätzen für Farbgebung, mechanische und optische Eigenschaften etc. und weiteren funktionellen Additiven einen Grundanteil an thermoaktivierbarem Klebstoff. Diese, bei Raumtemperatur nicht fliessfähige Komponenten werden im Extruder 17, der vorzugsweise ein Doppelschneckenextruder ist, compoundiert und zu einem homogenen, fliessfähigen Beschichtungsstoff gemischt unter progressiver Zunahme von Druck und Hitze. Die für die Beschichtung nötige Fliessfähigkeit wird so ohne Wasser oder org. Lösungsmittel erreicht.

Vorteilhaft an der Extrusionskaschierung sind:
- Der einstufige Prozess, bei dem das Mischen aller Komponenten durch zumeist gravimetrische Dosierung in die Extrusions-Doppelschnecke als sogenannte Compoundierung erfolgt, was die Homogenität und die durchgehend gleichmässige Temperatur der Mischung für das gleichförmige Fliessverhalten und damit eine enge Dickentoleranz der Beschichtung sichern hilft. Wässrige oder lösemittelhaltige Beschichtungen können zwar ebenfalls in line gemischt und dem Beschichtungswerk zugeführt werden, doch erfordert dies zusätzliche aufwändige Installationen und bedingt einen erheblichen Reinigungsaufwand;
- Die hohe Temperatur der Extrusion erübrigt eine zusätzliche Wärmezuführung für die Aktivierung des thermoraktivierbaren Klebers.
- Durch die Kombination von verschiedenen Düsen aus einem oder mehreren Extrudern lässt sich elegant auch eine mehrlagige bzw. mehrlagig differenzierte Beschichtung erzielen.
- Das Verfahren ist vorteilhaft für Haftschichten (tie layers), um schwierigere Deckschichten wie orientiertes Polypropylen sicher zu verbinden oder auch für zusätzliche Funktionsschichten in line.

Im Vergleich sind Extrusionskaschieranlagen mit einem oder zwei gegenüberliegenden Düsen (um 2 Deckschichten zu beschichten) teurer als Anlagen, die wässrige oder lösemittelhaltige Flüssigkeiten verarbeiten. Bei etwa gleichen Breiten und Geschwindigkeiten bietet sich die Extrusionskaschierung dadurch eher für die Herstellung grösserer Mengen an. Für kleinere Mengen ist die Flüssigbeschichtung günstiger.

Mit den Verfahren von Fig. 2 und Fig. 3 wird nur ein Durchlauf zur Herstellung eines erfindungsgemässen Mehrschichtmaterials 1 benötigt. Es wäre jedoch auch möglich, das Verfahren in eine Beschichtungs- und eine Kaschierphase zu unterteilen, wobei am Ende der Beschichtungsphase beschichtete Deckschichten für eine Zwischenlagerung aufgewickelt würden. Erst in der zeitlich und ggf. räumlich getrennt davon, ggf. sogar vom einem anderen Verarbeiter ausgeführten Kaschierung würden vorbeschichtete Deckschichten dann zu einem erfindungsgemässen Mehrschichtmaterial miteinander verbunden. Der Vorteil einer solchen zweistufigen Herstellung wäre, dass für längere Zeit eine grössere Flexibilität hinsichtlich des effektiven Aufbaus des Mehrschichtmaterials bestünde und dieses den jeweiligen Anforderungen des daraus hergestellten Endproduktes besser angepasst werden könnte. Bis zu ihrer Verbindung wären die beschichteten Deckschichten selbstständig handelbare Halbfabrikate. Ausserdem würde zur Beschichtung nur ein Beschichtungs- und - bei Beschichtungsstoffen auf wässriger oder lösemittelhaltiger Basis - nur ein Trocknungswerk benötigt. Nachteilig wäre hingegen, dass die durch das Trocknen bzw. das Aufschmelzen in dem Beschichtungsstoff vorhandene und in den Verfahren nach Fig. 2 und 3 für den Kaschierungsprozess genutzte Wärmeenergie verloren ginge.

Fig. 4 zeigt eine Anwendung eines erfindungsgemässen Mehrschichtmaterials, wobei in diesem integriert eine herauslösbare Karte als Stanzling erzeugt ist. Fig. 4a zeigt eine Aufsicht auf einen Abschnitt eines Mehrschichtmaterials 1 gemäss Fig. 1, der im Folgenden als Druckträger 50 bezeichnet wird, da er im Zusammenhang mit der Karte als handelsfertiger Gegenstand praktisch immer bedruckt sein wird. Die Karte ist in Fig. 4a mit 51 bezeichnet. Im Schnitt (entlang I - I in Fig. 3a) zeigt Fig. 4b die zur Erzeugung der Karte 51 ausgeführten Stanzungen durch Pfeile 52 und 53 angedeutet. Der Druckträger 50 ist demzufolge von seinen beiden Seiten her durch die Stanzlinen 52 und 53 jeweils in sich geschlossen, d.h. vollumlaufend angestanzt, wobei die Stanzlinien 52 und 53 sind im Wesentlichen deckungsgleich ausgeführt sind. Die Deckschichten 10 und 20 sind voll durchgestanzt, während der Beschichtungsstoff 30 zumindest abschnittsweise lediglich angestanzt ist, so dass dort eine Reststärke verbleibt. Über diese Reststärke ist die Karte 51 mit dem sie umgebenden Material des Druckträgers 50 noch verbunden. Moderne Stanzanlagen weisen eine Toleranz von genauer +/- 0,005 mm auf. Sollen die Deckschichten immer voll durchgestanzt werden, muss das Toleranzfeld ausschliesslich im Beschichtungsstoff liegen. Zwei mal 0,010 mm Toleranzfeld ergibt im ungünstigsten Fall Dicke Beschichtungsstoff minus 0,020 mm als Reststärke, im günstigsten Fall, bei extremer Kompensation beider Toleranzfelder, Dicke Beschichtungsstoff minus 0,000 mm als Reststärke. Für ein sicheres Durchstanzen der Deckschichten ist sollte das Toleranzfeld sogar um wenige Mikrometer mm weg von der Kontaktlinie Deckschicht/Beschichtungsstoff liegen.

Durch Druckausübung auf die Karte 51 kann die Reststärke des Beschichtungsstoffes 30 entlang der Stanzlinien 52/53 durchtrennt und die Karte 51 aus dem Druckträger 50 herausgelöst werden. Fig. 4c zeigt den Druckträger 50 mit der herausgelösten Karte 51.

Die Kraft, die erforderlich ist, um die Karte 51 aus dem Druckträger 50 herauszulösen, sollte möglichst gering sein, allerdings auch so gross, dass die Karte 51 beim bestimmungsgemässen Gebrauch des Druckträgers 50 sich aus diesem vor ihrer gewollten Entnahme nicht vorzeitig herauslöst. Insbesondere sollte der Druckträger handhabbar und/oder maschinell verarbeitbar und dabei insbesondere in Bogendruckern mit Rollenumlenkung bedruckbar sein, ohne dass die Karte 51 sich dabei herauslöst. Indem die beiden Deckschichten 10 und 20 durch die Stanzlinien 52 und 53 voll durchgeschnitten sind, wird die Haltekraft der Karte 51 ausschliesslich durch die erwähnte Reststärke im Beschichtungsstoff 30 bestimmt. Die jeweils geeigneten Haltekräfte lassen sich dadurch durch Wahl der Zusammensetzung des Beschichtungsstoffes und insbesondere durch geeignete Einstellung seiner Reissfestigkeit einschliesslich der sogenannten Weiterreisfestigkeit nach einem Anriss ausreichend fein auf den gewünschten Wert einstellen. Der Beschichtungsstoff 30 sollte sich beim Herauslösen der Karte möglichst auch nicht "dehnen", so dass die herausgelöste Karte einen glatten, vor allem durch die geschnittenen Ränder der beiden Deckschichten 10, 20 bestimmten äusseren Rand aufweisen.

Im Allgemeinen günstig ist eine längenbezogene Haltekraft entlang der beiden deckungsgleichen Stanzlinien 52/53 von 1N/cm - 3N/cm. Ein Wert in diesem Bereich ist mit dem Beschichtungsstoff 30 nach der Erfindung ohne weiteres erreichbar, selbst wenn die Dicke des Beschichtungsstoffes wie im vorbeschriebenen Beispiel 0,075 mm oder sogar bis 0,450 mm beträgt. Bei einer Schicht aus einer Kunststofffolie aus Polyester, wie sie für zumindest eine der beiden Deckschichten 10 oder 20 bevorzugt verwendet wird, oder auch einer Schicht aus Papier wäre die erforderliche Reststärke zur Erzielung einer vergleichbaren Haltekraft um wenigstens eine Grössenordnung geringer und würde nur noch wenige Mikrometer betragen, wobei die Haltekraft empfindlich von der Reststärke abhinge. Bedingt durch die maschinentechnischen Toleranzen sind so geringe Reststärken mit der erforderlichen Genauigkeit stanztechnisch praktisch nicht realisierbar. Bei einem gleichzeitigen Stanzen bestünde zudem die Gefahr, dass sich die gegenüberliegenden Stanzschneiden berühren und gegenseitig zerstören. Mit dem erfindungsgemässen Beschichtungsstoff wird all dies vermieden. Die beidseitige Stanzung kann mit einer Stanzeinheit ausgeführt werden, indem das Mehrschichtmaterial zwischen zwei Magnetzylindern mit zwei identischen, jedoch gegengleichen Stanzblechen durch geführt wird. Dabei ist eine symmetrische Stanzung sicher zu stellen durch angepasste Blechbodenhöhen zur Zwangszentrierung des Mehrschichtmateriales, um ungleich tiefe Anstanzungen zu vermeiden. Dies gilt insbesondere bei verschiedenen Deckschichten je Seite mit unterschiedlichem Stanzwiderstand. Es kann aber auch auf einer modernen Anlage in einem Durchlauf zuerst nur eine Seite auf einer Stanzeinheit und dann die andere Seite auf einer folgenden Stanzeinheit in genügender Registergenauigkeit gefahren werden unter Anwendung einer Bahnzugregelung mit Kantensteuerung der Materialbahn oder gar einer Registersteuerung der Stanzlinien. Auch Stanzungen mit Laserstrahl sind möglich mit noch genauerer Tiefenregelung als mit mechanischen Werkzeugen und Stanzeinheiten. Mit dem erfindungsgemässen Beschichtungsstoff sind grosse Reststärken von wenigstens 0,025 mm möglich, wobei die jeweilige Reststärke nur auf +/- 25% genau eingehalten werden muss, was im gängigen Toleranzbereich der aktuell verbreitet verfügbaren Stanzvorrichtungen liegt. Aus den gleichen Gründen sind im Rahmen der Erfindung auch Positionierungstoleranzen der beiden Stanzlinien 52 und 53 relativ zueinander möglich, d.h. sie brauchen nicht exakt deckungsgleich zu sein, wobei das natürlich bevorzugt ist.

Der sogenannte "Griff" des Druckträgers 50 insgesamt sowie der Karte 51 wird vor allem bestimmt durch die Gesamtdicke D und die Biegesteifigkeit des verwendeten Mehrschichtmaterials. Wie bereits erwähnt, lässt sich die Biegesteifigkeit durch die Wahl der Zusammensetzung des Beschichtungsstoffes 30 variieren und auf den gewünschten Wert einstellen. Für Druckträger mit integrierten Karten bzw. für die Karten selbst ist im allgemeinen eine Biegesteifigkeit ausreichend, die etwa 70% der Biegesteifigkeit einer gereckten Kunststofffolie gleicher Gesamtdicke D aus einem Material entspricht, wie es für wenigstens eine der beiden Deckschichten 10 oder 20 verwendet wird. Insbesondere wäre ein Mehrschichtmaterial mit einer Biegesteifigkeit geeignet im Bereich von 70% der Biegesteifigkeit einer handelsüblichen, gereckten Polyerstermonofolie mit 0,175 mm Dicke. Eine solche Polyesterfolie weist eine Biegesteifigkeit zwischen 0,04 N/25 mm und 0,05 N/25 mm auf, gemessen als horizontale Zugkraft, die aufgewendet werden muss, um einen vertikal eingespannten Prüfling mit einem freiem Ende von 25 x 25 mm um 30° zu biegen.

Fig. 5 zeigt eine weitere bevorzugte Anwendung eines erfindungsgemässen Mehrschichtmaterials gemäss Fig. 1 zur Herstellung eines anderen Druckträgers 60, aus zwei Teildruckträgen, welche einerseits durch einen Abschnitt 61 eines erfindungsgemässen Mehrschichtmaterials und andererseits durch einen Papierbogen 66 gebildet werden. Wie in Fig. 5a dargestellt, ist entlang eines Randstreifens 62 des Mehrschichtmaterials eine der beiden Deckschichten 20 zusammen mit der auf sie in einem Verfahren gemäss Fig. 2 aufgebrachten Lage 30.2 Beschichtungsstoff entfernt. Zur Entfernung des mit 63 bezeichneten Streifens wird einerseits das Mehrschichtmaterial entlang 64 eingeschnitten. Zum anderen ist es für das Entfernen des Streifens 63 erforderlich, dass das Mehrschichtmaterial entlang der Grenzfläche zwischen den beiden Lagen 30.1 und 30.2 des Beschichtungsstoffes 30 trennbar ist. Durch Wahl der Zusammensetzung des Beschichtungsstoffes sowie durch die Verfahrensführung z.B. bei einem Verfahren gemäss Fig. 2 lässt sich der sogenannte Trennwert der beiden Lagen 30.1 und 30.2 gegen- bzw. voneinander geeignet einstellen. Ein Wert im Bereich von 2 N - 4 N/50 mm ist meist geeignet.

Damit die Trennung entlang der Grenzfläche zwischen den beiden Lagen 30.1 und 30.2 erfolgt, muss dieser Trennwert niedriger sein als der Trennwert der beiden Lagen gegenüber ihren jeweiligen Deckschichten 10 bzw. 20. Sofern die Lagen 30.1. und 30.2 wie in Fig. 2 jeweils auf die Deckschichten 10 und 20 beschichtet und erst danach miteinander in Kontakt gebracht wurden, wird dies in der Regel der Fall sein. Sofern eine Trennung entlang einer Grenzfläche zu einer der beiden Deckschichten gewünscht wird, kann dies beispielsweise durch Auftrag des gesamten Beschichtungsstoffes auf nur eine der Deckschichten erreicht werden, wobei die Haftung an dieser Deckschicht in der Regel grösser als gegenüber der anderen Deckschicht sein wird. Damit die Trennung per sogenanntem Adhäsionsbruch an einer bestimmten Grenzfläche erfolgt, muss im Übrigen die innere Kohäsion des Beschichtungsstoffes höher sein als der Trennwert an dieser Grenzfläche. Es wäre aber auch möglich, einen Kohäsionsbruch vorzusehen, wobei man einen Bruch zwischen den beiden Lagen 30.1 und 30.2 des Beschichtungsstoffes durchaus auch als Kohäsionsbruch im Beschichtungsmaterial auffassen könnte.

Die in Fig. 5a dargestellte Struktur mit einem überstehenden Randstreifen 62 erhält man auch, wenn man beispielsweise in einem Verfahren gemäss Fig. 2 oder 3, insbesondere jedoch in einem zweistufigen Verfahren mit separater Beschichtung und Kaschierung, die Deckschichten 10, 20 seitlich gegeneinander versetzt oder unterschiedlich breite Deckschichten verwendet. In diesem Fall würden mit Vorteil auch die vorbeschriebenen Anforderungen an die Trennbarkeit des Mehrschichtmaterials entfallen.

Fig. 5b zeigt den Papierbogen 66, welcher entlang eines Randstreifens 67 in seiner Dicke reduziert ist, wobei dies hier durch Abreissen eines Streifens 68 entsprechend einer Teilschicht des Papierbogens erfolgt ist. Der Papierriss ist durch eine Riffelung an den Rissflächen angedeutet. Die Breite des Randstreifs 67 entspricht der des Randstreifens 62 und beträgt beispielsweise 5 - 7 mm.

In Fig. 5c sind der Abschnitt 61 des Mehrschichtmaterials und der Papierbogen 66 entlang ihrer Randstreifen 62 bzw. 67 mit gegenseitiger Überlappung derselben im wesentlichen koplanar miteinander zu dem Druckträger 60 verbunden, welcher insgesamt einen Bogen in einem üblichen Format wie A4 oder Letter bilden kann. Die Verbindung ist hierbei eine Klebeverbindung, wobei als Klebstoff die Lage Beschichtungsstoff 30.1 verwendet ist.

Die Verwendung dieser bereits vorhandenen Lage zur Verbindung der beiden Teildruckträger 61, 66 ist möglich, wenn der in dem Beschichtungsstoff enthaltene thermoaktivierbare Klebstoff mehr als nur einmal durch Anwendung von Wärme und Druck aktivierbar ist. Einen erste Aktivierung dieses Klebstoffes wurde bereits bei der Herstellung des Mehrschichtmaterials wie vorbeschrieben "verbraucht". Die meisten thermoaktivierbaren Kleber, unter anderem die gemäss den vorstehend angegebenen Beispielen, weisen diese Eigenschaft aber auf, d.h. sie können mehrfach aktiviert werden.

Durch die Verwendung der Lage Beschichtungsstoff 30.1 als Klebstoff entfällt in vorteilhafter Weise die Applikation eines zusätzlichen Klebstoffes zur Verbindung der beiden Teildruckträger 61, 66. Der in der Lage Beschichtungsstoff 30.1 enthaltene Klebstoff muss unter gegenseitigem Verpressen der beiden Randstreifen 62, 67 lediglich erhitzt werden. Bevorzugt erfolgt die Aktivierung des Beschichtungsstoffes 30.1 im Randstreifen durch Heissluftdüsen unmittelbar vor dem Verpressen. Auch beheizte Kontaktelemente schleifend oder rotierend sind möglich wie auch neuere Technologien wie berührungsfreie Hochfrequenzfelder oder Ultraschallsonotroden. Damit erübrigen sich aufwändigere Helzwalzen. Es genügen somit vorhandene kalte Presswalzen wie diese auch beim Einsatz eines zusätzlichen Klebers erforderlich wären. Ausser einem zusätzlichen Klebstoff wird auf diese Weise auch ein Auftragswerks für einen solchen zusätzlichen Kleber eingespart.

Bei dem Druckträger 60 von Fig. 5c ist in dem Mehrschichtmaterial noch eine Karte 65 entsprechend der Karte 51 von Fig. 3 gestanzt. Fig. 5c zeigt damit auch ein Beispiel dafür, wie die Vorteile des erfindungsgemässen Mehrschichtmaterials zur Herstellung integrierter Karten mit einem kostengünstigen Papiermaterial in einem bogenförmigen Druckträger kombiniert werden können, wobei dieser vollständig ohne die bisher üblichen Aufspendungen zur Ausbildung der Karte auskommt und auch ansonsten, selbst im Überlappungsbereich seiner beiden Teile, keine Dickenunterschiede aufweist, die zu einer Schieflage in einem Stapel aus mehreren solchen Druckträgern führen könnten und jederzeit vollflächig zweiseitig bedruckbar bleibt im Gegensatz zu aufgespendeten Karten.

Die Herstellung der beiden Teildruckträger 61 und 66, das Entfernen der Randstreifen 63 und 68, ihre gegenseitige Verbindung zum Druckträger 60 und/oder das Stanzen der Karten 51 bzw. 65 erfolgt bevorzugt, wie schon die Herstellung des erfindungsgemässen Mehrschichtmaterials, in einem Endlosverfahren an Endlosbahnen. Diese können im gleichen Durchlauf zudem bedruckt und/oder durch Formatschneiden in Bögen vereinzelt werden. Stanzen, Bedrucken und Vereinzeln hat dabei im Register zu erfolgen.

Anstatt durch Abreissen eines Streifens wie z.B. des Streifens 68 in Fig. 5b könnte der Papierbogen auch durch Verpressen des Papiermaterials entlang und in der Breite eines Streifens in seiner Dicke reduziert sein. Ein solches Verpressen wurde im Rahmen eines Endlosverfahrens bereits beschrieben in US 4447481, wobei dort auch eine Vorrichtung mit zwei Pressrollen für das Verpressen beschrieben wird. Eine der beiden Rollen ist mit einer umlaufenden, streifenförmigen Erhöhung versehen. Solche speziellen Vorrichtungen sind in Betrieben des sogenannten Web-Finishing, die für die endlose Herstellung von Druckträgern der Art von Fig. 5c ausgerüstet sind, üblicherweise jedoch nicht vorhanden. Standard sind dort Vorrichtungen zum Stanzen mit Magnet- und Gegenzylinder. Auf dem Magnetzylinder werden bedarfsweise Stanzbleche magnetisch fixiert, die mit schmalen Stanzschneiden versehen sind. Die Stanzbleche weisen typisch eine Bodendicke von ca. 0,12 mm auf und erstrecken sich nur über einen Teilumfang des Magnetzylinders. Geschlossene Ringe lassen sich auf dem Magnetzylinder dagegen nicht einfach montieren und demontieren. Immerhin wäre es denkbar, in den vorhandenen Stanzvorrichtungen anstelle des Magnetzylinders eine Expansionswelle einzusetzen, auf der endlose Pressringe montierbar wären, doch müsste dann der Magnetzylinder jeweils bedarfsweise aufwändig gegen eine solche Expansionswelle ausgetauscht werden. Ausreichend präzise Expansionswellen sind als zudem sehr teure Bauteile.

Durch folgende, für sich einzeln und/oder in verschiedenen Kombinationen untereinander auch selbstständig erfinderische Massnahmen, lassen sich die vorhandenen Vorrichtungen mit Magnet- und Gegenzylinder jedoch ebenfalls zum streifenförmigen Verpressen von Endlos-Papierbahnen verwenden:
- Wie zum Stanzen werden auf dem Magnetzylinder magnetisch fixierbare Bleche verwendet und zwar vorzugsweise pro Magnetzylinder jeweils nur ein Blech, das sich auf dem Magnetzylinder zu einem im wesentlichen geschlossenen, gleichwohl noch offenen Ring biegen lässt.
- Anstelle von schmalen Stanzgraten sind diese Bleche mit einem erhöhten Pressstreifen wesentlich grösserer Breite versehen.
- Für die Bleche insgesamt ist z.B. eine Breite von 50 - 100 mm geeignet.
- Um eine zu hohe, lokale Belastung des Magnetzylinders durch das Verpressen im Bereich des erhöhten Pressstreifens zu vermeiden, werden die auftretenden Presskräfte über einen grösseren Bereich verteilt, indem die Bleche mit einem gegenüber den Stanzblechen dickeren Boden von 0,200 - 0,300 mm versehen werden.
- Bei einem üblichen Spaltmass von 0,580 mm zwischen dem Magnet- und dem Gegenzylinder wird die Gesamtdicke des Blechs im Bereich des Presstreifens so gewählt, das die Verpressbarkeit der jeweiligen Endlos-Papierbahn voll genutzt wird. Beispielsweise kann ein 140 g schweres Formularpapier von 0,180 mm Dicke mit einem 0,550 mm hohen Pressblech auf 0,120 mm gepresst werden.
- Die seitlichen Flanken des Pressstreifens sind gegenüber dem Boden des Blechs vorzugsweise zwischen 70° - 90° geneigt.
- Die seitlichen Kanten des Pressstreifen sind weiter vorzugsweise abgerundet mit einem Radius von ca. 0,100 - 0,200 mm, um ein Einschneiden ins Papier in der Presskante zu vermeiden, wobei dies mit zunehmender Flankensteilheit kritischer wird.
- Die Flachbreite des Pressstreifens kann der Breite entsprechen, wie sie oben für die Randstreifen 62 und 76 bzw. die Streifen 62 und 68 angegeben wurde und kann entsprechend 5 - 7 mm betragen mit Zugabe von z. B. 2 mm, damit auch die Kante der Papierbahn in jedem Fall gepresst wird.
- Mit den vorgenannten Dimensionierungen sind die Bleche allerdings so steif, dass sie sich anders als übliche Stanzbleche aus einer Flachlage nicht mehr so einfach biegen lassen und/oder in gebogener Form mit ihren Enden nicht mehr ausreichend fest auf dem Magnetzylinder haften, so dass insbesondere die Enden von diesem abstehen. Zur Lösung dieses Problems werden die Bleche deshalb aus Federstahl oder Blechen, die sich ähnlich verhalten, gefertigt und vorgebogen und zwar auf einen noch kleineren Radius als den Radius des Magnetzylinders, so dass sie zur Montage auf dem Magnetzylinder etwas aufgebogen werden müssen. Die Vorbiegung sollte insbesondere an den Enden der Bleche stärker ausgeprägt sein als im übrigen Umfang, damit sich diese nicht vom Umfang abheben. Ein Endlospressblech erfordert auch einen leicht höheren Verkürzungsfaktor als ein Endlosstanzblech aufgrund der grösseren erhabenen Fläche.
- Indem die Bleche auf dem Magnetzylinder einen nur im wesentlichen geschlossenen und damit gleichwohl noch offenen Ring bilden, ergibt sich zwischen ihren Querkanten zwangsläufig ein Spalt, wobei dieser kleiner als 0,200 mm gehalten werden kann. Um zu vermeiden, dass dieser Spalt auf der gesamten Breite der Prägebleche gleichzeitig einen Schlag verursacht, sind die Querkanten der Bleche bevorzugt schräg, insbesondere bevorzugt um 30° schräg geschnitten. Der Spalt wird dadurch auf eine gewisse Abwicklungslänge der Prägebleche verteilt. Es erfolgt damit eine praktisch durchgehende Verpressung. Im schlechtesten Fall ist diagonal zur Laufrichtung nach jeder vollen Blechlänge ein Unterbruch bezüglich der Pressung kleiner als die erwähnten 0,200 mm vorhanden, was den Effekt der Materialverdünnung aber nicht wesentlich vermindert, umsomehr als dieser Unterbruch ausserhalb des fertig geschnittenen Endformates (in den Abfall) gelegt werden kann und dort dann auch optisch nicht mehr stört.

Die Herstellung des Druckträgers 60 von Fig. 5c könnte im Rahmen des vorschriebenen, zweistufigen Verfahrens auch zusammen mit dem Kaschieren von zwei vorgängig beschichteten Deckschichten erfolgen Es müssten dazu zwei vorbeschichtete Deckschichten sowie eine Papierbahn dem Kaschierwerk zugeführt werden. Gegebenenfalls lässt sich hierbei im gleichen Durchlauf vorgängig, eventuell aber auch auf dem Kaschierwerk selbst, die Verpressung der Papierbahn zur koplanaren Verbindung der beiden Teildruckträger ausführen.

Fig. 6 zeigt unter a) im Schnitt und unter b) in Aufsicht ein Blech 70 mit den vorstehenden Merkmalen, wobei der erhöhte Pressstreifen mit 71 bezeichnet ist. Die seitlichen Flanken des Pressstreifens 71 sind gegenüber dem Boden unter einem Flankenwinkel α von 70° geneigt, funktionieren aber auch einwandfrei bei 90° allein durch die Druckverteilung in Laufrichtung über die dickere Bodenhöhe. Die Kanten des Pressstreifens 71 sind etwas abgerundet (Radius R). Der 30° Schnitt der Querkanten des Pressbleches zieht jeden Punkt der Querkante durch die Verwinkelung des Stosses in Laufrichtung an den Magnetzylinder. Dieser Effekt ist annähernd proportional zu diesem Winkel, eine Vergrösserung des Winkels erhöht den positiven Effekt, erschwert aber Herstellung und Handhabung in Montage.

Die Figuren 7, 8 und 9 zeigen Beispiele abgewandelter Ausführungsformen des Mehrschichtmaterials 1 von Fig. 1.

Bei dem Mehrschichtmaterial von Fig. 7 ist auf der Deckschicht 10 eine Printschicht 81 aufgebracht, die für eine gute Haftung von Druckfarbe oder Toner auf der Deckschicht 10 sorgt. Die Schicht 81 könnte alternativ oder zusätzlich auch eine Mattierung der Oberfläche bewirken, wärmereflexiv sein und/oder Membraneigenschaften aufweisen. Durch Beimischung beispielsweise der in den Beispielen verwendeten Komponenten #3, #4, #5 und/oder #6 könnte die Opazität des Mehrschichtmaterials gesteigert werden. Eine entsprechende Schicht könnte auch auf der Deckschicht 20 vorgesehen sein.

Bei dem Mehrschichtmaterial von Fig. 8 ist eine Kleberschicht 82 zwischen der Deckschicht 10 und dem Beschichtungsstoff 30 vorhanden, welche eine stärkere Verbindung zwischen der Deckschicht 10 und dem Beschichtungsstoff 30 vermittelt und beispielsweise eingesetzt werden könnte, wenn der gesamte Beschichtungsstoff nur auf die Deckschicht 20 aufgetragen wird. Eine entsprechende Schicht könnte auch zwischen der Deckschicht 20 und dem Beschichtungsstoff 30 oder zwischen zwei Lagen Beschichtungsstoff vorgesehen sein. Es kann sich z. B. um eine thermoplastisch aktivierbare Kleberschicht oder eine Haftkleberschicht (PSA = pressure sensitive adhesive) handeln.

Bei dem Mehrschichtmaterial1 von Fig. 9 ist zwischen den beiden Lagen 30.1 und 30.2 des Beschichtungsstoffes zusätzlich noch eine Funktionsschicht 83 vorhanden, wobei deren Funktionalität von verschiedener Art sein kann, beispielsweise Wärme leitend oder Wärme isolierend oder elektrisch isolierend oder leitend, hitzebeständig, flammhemmend, antibakteriell, Flüssigkeiten oder Duftstoffe enthaltend, aufnehmend oder abgebend und/oder chemisch reaktiv. Die Schicht 83 muss nicht notwendig einlagig und auch nicht notwendig zwischen den beiden Lagen 30.1 und 30. 2 angeordnet ein. Entsprechende Funktionalitäten könnten durch geeignete Beimischungen auch der Beschichtungsstoff selbst oder eine Lage des Beschichtungsstoffes aufweisen, wobei dann die Schicht 83 ggf. entfallen könnte.

Wie erwähnt, erfolgt die Herstellung und Verarbeitung des erfindungsgemässen Mehrschichtmaterials bevorzugt in Endlosverfahren, wobei beispielsweise Stanzungen zur Herstellung von Stanzlingen wie beispielsweise der Karte 65 im Druckträger 60 von Fig. 5c im Durchlauf durch ein Stanzwerkzeug vorgenommen werden. Zudem müssen die so erzeugten Stanzlinge danach im Durchlauf durch ein weiteres Werkzeug oft noch mit einem Merkmal versehen werden, welches einer Positionierung innerhalb vorgegebener Grenzen auf ihnen bedarf. Diese Positionierung kann wesentlich erleichtert werden, wenn mit dem Stanzwerkzeug in dem Mehrschichtmaterial relativ zu den Stanzlingen jeweils toleranzfrei angeordnete Markierungen freigestanzt werden, welche bei der nachfolgenden Bearbeitung der Stanzlinge zur Einsteuerung des genannten Merkmals verwendet werden. Bei den Markierungen kann es sich insbesondere um freigestanzte Kanten handeln, indem beispielsweise an einer Endlosbahn gezahnte Randstreifen abgetrennt werden. Zusammen mit dem Stanzen der Stanzlinge könnte eine Endlosbahn auch in Bögen vereinzelt werden, wobei dann die äusseren Bogenränder als Markierungkanten verwendet werden könnten. Bei dem einzusteuernden Merkmal kann es sich beispielsweise um eine Codierung auf einem sich auf den Stanzlingen erstreckenden Magnetstreifen, um die Anbringung eines Chipkartenmoduls, das Aufbringen einer Materialschicht und/oder um einen ortsveränderlichen Aufdruck handeln.

### BEZEICHNUNGSLISTE

- 1: Mehrschichtmaterial
- 10: Deckschicht
- 11: Rolle Deckschicht 10
- 12: Position Beschichtungswerk
- 13: Position Trocknungswerk
- 14: Walze
- 15: Kühlwalze
- 16: Kühlwalze
- 17: Extruder
- 18: Abnahmewalze
- 20: Deckschicht
- 21: Rolle Deckschicht20
- 22: Position Beschichtungswerk
- 23: Position Trocknungswerk
- 24: Walze
- 25: Kühlwalze
- 26: Anpresswalze
- 30: Beschichtungsstoff
- 30.1: Lage Beschichtungsstoff
- 30.2: Lage Beschichtungsstoff
- 40: Rolle Mehrschichtmaterial
- 50: Druckträger
- 51: Karte
- 52: Pfeile Stanzlinie
- 53: Pfeile Stanzlinie
- 61: Mehrschichtmaterial
- 60: Druckträger
- 62: Randstreifen
- 63: abgelöster Streifen
- 64: Position Einschnitt
- 65: Karte
- 66: Papierbogen
- 67: Randstreifen
- 68: abgelöster Streifen
- 70: Blech zum Verpressen
- 71: Pressstreifen
- 72: Spitze am Blech
- 73: Ausnehmung am Blech
- 81: Printschicht
- 82: Kleberschicht
- 83: Funktionsschicht
- 100: Endlosbahn / Papierbahn / Rolle
- 200: Endlosbahn / Folienbahn / Mehrschichtmaterialbahn / Rolle
- 300: Endlosbahn / Rolle
- 130: Randstreifen
- 110: Abrollung Klebestreifen
- 120: Aufrollung Klebestreifen und Tellschichicht
- 320: Selbstkleberschicht
- 310: Folienbahn
- 330: Abdeckung
- 340: Abziehposition
- 350: Aufrollung Abdeckung
- 400: Druckträger / Rolle
- 400': Druckträgerbögen
- 410: Karten
- 420: Kerben
- I-IV: Stationen
- D: Gesamtdicke des Mehrschichtmaterials
- d1: Dicke der Deckschicht 10
- d2: Dicke der Deckschicht 20
- d3: Dicke der Schicht Beschichtungsstoff
- R: Radius

## Patentansprüche

1. Verfahren zur Herstellung eines aus wenigstens zwei flächigen Teildruckträgerbahnen (61, 66) koplanar zusammengefügten Druckträgers (60),
wobei für eine der Teildruckträgerbahnen (61) ein Mehrschichtmaterial mit zwei Deckschichten (10, 20) und einem diese miteinander verbindenden, einen Klebstoff enthaltenden formlosen Beschichtungsstoff (30) verwendet ist,
wobei entlang eines Randstreifens (62) die eine Teildruckträgerbahn (61) eine geringere Dicke als ihre Dicke im Übrigen aufweist,
wobei die andere Teildruckträgerbahn eine Papierbahn (66) ist, welche entlang eines Randstreifens (67) eine geringere Dicke als ihre Dicke im Übrigen aufweist, und
wobei die beiden Teildruckträgerbahnen (61, 66) entlang ihrer beiden Randstreifen (62, 67) in einem Durchlauf der Bahnen koplanar miteinander verbunden werden,
**dadurch gekennzeichnet,**

2. **dass** der Randstreifen (67) der Papierbahn (66), entlang von welchem die Papierbahn (66) eine geringere Dicke als ihre Dicke im Übrigen aufweist, durch Verpressen der Papierbahn (66) erhalten wird und dass das Verpressen der Papierbahn (66) auf einer Vorrichtung mit einem Magnet- und einem Gegenzylinder ausgeführt wird, wobei auf dem Magnetzylinder ein Blech (70) mit einem Boden und einem gegenüber diesem erhöhten Pressstreifen (71) magnetisch fixiert ist, das auf dem Magnetzylinder einen im wesentlichen geschlossenen, gleichwohl noch offenen Ring bildet. Verfahren nach Anspruch 1, **dadurch gekennzeichnet, dass** der Randstreifen (67) der Papierbahn (66), entlang von welchem die Papierbahn (66) eine geringere Dicke als ihre Dicke im Übrigen aufweist, durch Verpressen der Papierbahn (66) in demselben Durchlauf erhalten wird.

3. Verfahren nach Anspruch 1 oder 2, **dadurch gekennzeichnet, dass** der Spalt zwischen den Querkanten des Blechs (70) kleiner als 0,200 mm ist.

4. Verfahren nach einem der Ansprüche 1 - 3, **dadurch gekennzeichnet, dass** die Querkanten des Blechs (70) gegenüber dessen Längskanten schräg, bevorzugt um 30° schräg geschnitten sind.

5. Verfahren nach einem der Ansprüche 1 - 4, **dadurch gekennzeichnet, dass** das Blech (70) eine Breite von 50 - 100 mm aufweist.

6. Verfahren nach einem der Ansprüche 1 - 5, **dadurch gekennzeichnet, dass** der Pressstreifen (71) eine der Breite des Randstreifens (67) der Papierbahn (66) entsprechende Flachbreite von vorzugsweise 5-7 mm, vorzugsweise mit einer Zugabe von 2 mm, aufweist.

7. Verfahren nach einem der Ansprüche 1 - 6, **dadurch gekennzeichnet, dass** die seitlichen Kanten des Pressstreifens mit einem Radius (R) von 0,100 - 0,200 mm abgerundet sind.

8. Verfahren nach einem der Ansprüche 1 - 7, **dadurch gekennzeichnet, dass** der Boden des Blechs (70) eine Dicke von 0,200 - 0,300 mm aufweist.

9. Verfahren nach einem der Ansprüche 1 - 8, **dadurch gekennzeichnet, dass** die seitlichen Flanken des Pressstreifens (71) gegenüber dem Boden des Blechs (70) zwischen 70° - 90° geneigt sind.

10. Verfahren nach einem der Ansprüche 1 - 9, **dadurch gekennzeichnet, dass** das Blech (70) aus Federstahl oder einem sich ähnlich verhaltenden Blech gefertigt und auf einen noch kleineren Radius als den Radius des Magnetzylinders vorgebogen ist, so dass es zur Montage auf dem Magnetzylinder aufgebogen werden muss.

11. Verfahren nach Anspruch 10, **dadurch gekennzeichnet, dass** die Vorbiegung des Blechs (70) an seinen Enden stärker ausgeprägt ist als in seinem übrigen Umfang.

12. Verfahren nach einem der Ansprüche 1-11, **dadurch gekennzeichnet, dass** die Verbindung der beiden Teildruckträgerbahnen (61, 66) entlang ihrer beiden Randstreifen (62, 67) und die Verbindung der beiden Deckschichtbahnen (10, 20) zu der einen Teildruckträgerbahn (61) auf demselben Kaschierwerk ausgeführt wird.

13. Verfahren nach einem der Ansprüche 1-12 **dadurch gekennzeichnet, dass** vorzugsweise in demselben Durchlauf auch der Randstreifen der Papierbahn, entlang von welchem die Papierbahn (66) eine geringere Dicke als ihre Dicke im Übrigen aufweist, durch zusätzliches Abreissen eines Streifens von der Papierbahn erhalten wird.

14. Verfahren nach einem der Ansprüche 1-13, **dadurch gekennzeichnet, dass** in demselben Durchlauf die genannten Bahnen (61, 66) und/oder der daraus hergestellte Druckträger (60) mit einem Stanzwerkzeug mit Stanzlingen (65) versehen werden und dass relativ zu diesen Stanzlingen (65) mit demselben Stanzwerkzeug jeweils toleranzfrei angeordnete Markierungen freigestanzt werden, welche bei der nachfolgenden Bearbeitung der Stanzlinge (65) im Durchlauf durch ein weiteres Werkzeug zur Einsteuerung eines einzusteuernden Merkmals verwendet werden können.

15. Verfahren nach Anspruch 14, **dadurch gekennzeichnet, dass** mit dem Stanzwerkzeug zusammen mit dem Stanzen der Stanzlinge eine Endlosbahn in Bögen vereinzelt wird.
